(19) Europäisches Patentamt
European Patent Office
Office européen des brevets

(11) **EP 1 391 498 B1**

(12) **EUROPEAN PATENT SPECIFICATION**

(45) Date of publication and mention
of the grant of the patent:
**07.09.2016 Bulletin 2016/36**

(21) Application number: **02769215.1**

(22) Date of filing: **08.05.2002**

(51) Int Cl.:
*C10L 1/197* [(2006.01)]  *C10L 1/14* [(2006.01)]
*C10L 10/14* [(2006.01)]  *C08F 210/02* [(2006.01)]
*C08F 2/38* [(2006.01)]  *C08F 6/04* [(2006.01)]

(86) International application number:
**PCT/JP2002/004475**

(87) International publication number:
**WO 2002/090470 (14.11.2002 Gazette 2002/46)**

(54) **FLUIDITY IMPROVER AND FUEL OIL COMPOSITION**

FLIESSFÄHIGKEITSVERBESSERER UND BRENNÖLZUSAMMENSETZUNG

AGENT FLUIDIFIANT ET COMPOSITION DE MAZOUT

(84) Designated Contracting States:
**DE FR**

(30) Priority: **08.05.2001 JP 2001136917**

(43) Date of publication of application:
**25.02.2004 Bulletin 2004/09**

(73) Proprietor: **Sanyo Chemical Industries, Ltd.
Kyoto-shi,
Kyoto 605-0995 (JP)**

(72) Inventors:
• **NAKANISHI, Hideo**
**Kyoto-shi**
**Kyoto 605-0995 (JP)**
• **AO, Nobuhiro**
**Kyoto-shi**
**Kyoto 605-0995 (JP)**
• **NISHIDA, Minoru**
**Kyoto-shi**
**Kyoto 605-0995 (JP)**

(74) Representative: **Weickmann & Weickmann
PartmbB
Postfach 860 820
81635 München (DE)**

(56) References cited:
| | |
|---|---|
| EP-A- 0 301 837 | EP-A- 0 493 769 |
| EP-A- 0 683 184 | EP-A- 0 931 824 |
| WO-A-96/07718 | WO-A-96/17905 |
| WO-A-99/29748 | GB-A- 1 186 565 |
| JP-A- 9 208 971 | JP-A- 10 237 468 |
| JP-A- 10 245 574 | JP-A- 10 265 787 |
| JP-A- 11 181 453 | JP-A- 59 008 789 |
| JP-A- 60 081 292 | JP-A- 61 287 985 |
| JP-A- 2000 087 052 | US-A- 3 887 610 |
| US-A- 4 087 255 | |

• **DATABASE WPI Week 200422 Thomson Scientific, London, GB; AN 2004-230090 XP002534293 & JP 2003 292977 A (SANYO CHEM IND LTD) 15 October 2003 (2003-10-15)**
• **KOICHIRO UCHIDA ET AL.: '19. keiyu no teion ryudosei ni tsuite-ryudosei kojozai no saiteki katsuyo hoho-' '98 SEKIYU SEIHIN TORONKAI 1998, pages 143 - 149, XP002954471**
• **MANABU WATANABE ET AL.: 'keiyu-juyutoyo tenkazai' MITSUBISHI SEKIYU GIJTUSU SHIRYO no. 83, 1995, pages 90 - 99, XP002954472**

EP 1 391 498 B1

**Description**

TECHNICAL FIELD

The present invention relates to a flow improver (hereinafter sometimes referred to briefly as FI). More particularly, the invention relates to an FI which is useful for wax-containing fuel oils and to a fuel oil composition.

BACKGROUND ART

As flow improvers for improving the low temperature fluidity of middle distillate oil, (1) ethylene-vinyl acetate copolymers [USP 3,093,623, USP 3,048,479, German Patent 11 47 799, etc.], (2) copolymers of ethylene with vinyl acetate and other saturated carboxylic acid vinyl esters [WO94/00536, WO96/07720, etc.], and (3) combinations of two different ethylene-saturated carboxylic acid vinyl ester copolymers [WO94/00516, WO96/17905, etc.] have heretofore been proposed.

However, while these flow improvers (1) to (3) are effective in improving the low temperature fluidity of the conventional sulfur-rich fuel oils, these must be added in increased amounts to low-sulfur fuel oils.

WO 96/07718 A discloses an ethylene terpolymer, which can be used to improve the low temperature properties of an oil.

EP 0 493 769 A discloses a terpolymer comprising ethylene structural units and vinyl acetate structural units which also can be used to improve the flowability of mineral oil distillates.

Further, WO 99/29748 A discloses a process for preparing an ethylene/vinyl acetate copolymer to be used as a flow improver in mineral oil middle distillates.

Also considering these documents there was still a need for highly effective flow improvers and for methods for preparing such copolymers.

SUMMARY OF THE INVENTION

The object of the present invention is to provide a flow improver capable of improving the low temperature fluidity of fuel oils even at low levels of addition.

In accordance with the present invention, the above object can be accomplished by using a flow improver as defined by the present claims.

DISCLOSURE OF THE INVENTION

In the present invention, it is important that the vinylic polymer (A11) constituting an essential component of the flow improver should contain hexane-insolubles in a defined range at a defined temperature.

At +10°C, (A11) contains hexane-insolubles in an amount of generally at most 30% (unless otherwise specified, % invariably means % by weight), preferably at most 25%, more preferably at most 20%, still more preferably at most 15%, most preferably at most 10%. If the hexane-insolubles at +10°C exceed 30%, the flow improver will have to be used at high addition levels in order that sufficient low temperature fluidity may be expressed and, moreover, filterability of fuel oil compositions at room temperature will be adversely affected.

At -20°C, (A11) should contain hexane-insolubles in an amount of generally at least 60%, preferably at least 65%, more preferably at least 70%, most preferably at least 75%. If the hexane-insolubles at -20°C is less than 60%, the flow improver will have to be used at high addition levels in order that a sufficient low temperature fluidity may be expressed.

Moreover, the difference between the hexane-insolubles at +10°C and the hexane-insolubles at -20°C, of (a11), should be generally at least 30%, preferably at least 45%, more preferably at least 55%, most preferably at least 60%.

This difference is preferably as large as practicable, for the larger the difference is, the greater is the degree of improvement in low temperature fluidity that can be attained by addition of the flow improver.

In addition, (A11) should contain hexane-insolubles at 0°C of preferably at most 50%, more preferably at most 35%, still more preferably at most 30%, most preferably at most 25%.

When the hexane-insolubles at 0°C is in the above range, addition of the flow improver even at low levels results in sufficient improvements in the low temperature fluidity and room-temperature filterability of fuel oil compositions.

The hexane-insolubles at +10°C and -20°C can be respectively determined by the following procedure. In the first place, 100 g of a sample is taken into a 500 ml beaker and dried in vacuo at 150°C/10 mmHg for 2 hours to remove the volatile matter. About 30 g of the residue is accurately weighed (this weight is written as (W)[g]) and diluted with n-hexane to 20% polymer concentration to give an n-hexane solution (dissolution aided by warming, where necessary, until a homogeneous, clear solution is obtained). This solution is placed in a 400 ml centrifuge cuvette and allowed to stand in an incubator at +10°C for 4 hours. The solution is then centrifuged at 10,000 rpm for 30 minutes using a centrifuge controlled at +10°C and the insoluble fraction is separated from the soluble fraction by decantation. The insoluble fraction in the centrifuge cuvette is dried in vacuo at 120°C/10 mmHg for 2 hours to remove the remaining hexane and the hexane-insolubles at +10°C, i.e. (Wi/W) x 100 [%], is then calculated from the weight of the residue (Wi) [g].

On the other hand, the solution separated as the hexane-soluble fraction at +10°C is placed in a centrifuge cuvette again and allowed to stand in an incubator at -20°C for 4 hours. This solution is centrifuged with a centrifuge controlled at -20°C in the same manner as above to separate the insoluble fraction from the soluble fraction. The soluble fraction obtained is concentrated using a vacuum evaporator and, then, dried in vacuo under the same conditions as above. From the weight found, i.e. (Ws) [g], the hexane-insolubles at -20°C, i.e. {100 - (Ws/W) x 100} [%], is calculated.

The hexane-insolubles at 0°C can be determined by setting the standing temperature and centrifuge temperature to 0°C and otherwise repeating the procedure for determination of the hexane-insolubles at +10°C.

Copolymer (A11) which comprises units of ethylene (a) and another units of vinylic monomer (b11) as essential structural units. Further disclosed is a polymer (A2) which comprises units of vinylic monomer (c) having a long-chain alkyl group as an essential structural unit but not containing (a) can be mentioned.

It should be understood that in the context of the invention, the term "vinylic monomer" means a monomer having an unsaturated double bond capable of vinyl polymerization.

Referring to (A11), the other vinylic monomer (b) which, together with (a), constitutes the copolymer includes an unsaturated ester (b1), an $\alpha$-olefin (b2) containing 3 to 22 carbon atoms, and other vinylic monomer (b3).

As examples of (b1), alkenyl esters of carboxylic acids (b11) and alkyl, aryl or aralkyl esters of unsaturated carboxylic acids (b12) can be mentioned.

The carboxylic acids which constitute (b11) are linear and branched-chain $C_{2-24}$ (number of carbon atoms inclusive of carbonyl carbon; the same applies hereinafter), (preferably $C_{2-16}$, particularly $C_{2-12}$) aliphatic saturated carboxylic acids [linear aliphatic saturated carboxylic acids (e.g. acetic acid, n-propionic acid, n-hexanoic acid, n-decanoic acid, n-dodecanoic acid, palmitic acid, stearic acid, behenic acid, etc.), branched-chain secondary aliphatic saturated carboxylic acids (2-ethylhexanoic acid etc.), and branched-chain tertiary aliphatic saturated carboxylic acids (neononanoic acid, neodecanoic acid, neododecanoic acid, etc.) ; $C_{8-22}$ unsaturated aliphatic carboxylic acids (oleic acid, linoleic acid, linolenic acid, etc.) ; $C_{6-12}$ aromatic carboxylic acids (benzoic acid, phenylacetic acid, naphthalenecarboxylic acid, etc.); and $C_{4-12}$ alicyclic carboxylic acids (cyclohexanecarboxylic acid, decahydronaphthalenecarboxylic acid, etc.); among others.

The alkenyl group as a constituent of (b11) includes alkenyl groups containing 2 to 4 (preferably 2) carbon atoms, such as vinyl, (meth) allyl and isopropenyl group, among others.

According to the invention, (b11) is selected from the group consisting of vinyl acetate, vinyl propionate, vinyl hexanoate, vinyl 2-ethylhexanoate, vinyl neodecanoate, vinyl decanoate, vinyl dodecanoate, vinyl palmitate and vinyl stearate.

As examples of (b12), alkyl, aryl and aralkyl esters of unsaturated monocarboxylic acids containing 3 to 18 (preferably 3 or 4) carbon atoms [e.g. (meth)acrylic acid (which means acrylic acid and methacrylic acid; the same applies hereinafter) etc.] and dialkyl, diaryl and diaralkyl esters of unsaturated dicarboxylic acids containing 4 to 12 (preferably 4 to 6) carbon atoms [fumaric acid, maleic acid, itaconic acid, etc.] can be mentioned.

As a constituent of (b12), the alkyl group includes linear and branched-chain alkyl groups containing 1 to 24 carbon atoms, i.e. lower alkyl groups (e.g. methyl, ethyl, isopropyl, butyl group, etc.) and higher alkyl groups [linear primary alkyl groups (e.g. octyl, nonyl, decyl, undecyl, dodecyl, tridecyl, tetradecyl, hexadecyl, octadecyl, nonadecyl group, etc.) and branched-chain alkyl groups (2-ethylhexyl, 2-methylstearyl, 2-methyleicosyl, 2-methyldocosyl group, etc.)]; the aryl group includes aryl groups containing 6 to 12 carbon atoms (e.g. phenyl, naphthyl group, etc.); and the aralkyl group includes aralkyl groups containing 7 to 11 carbon atoms (e.g. benzyl, phenethyl group, etc.).

Among specific examples of (b12) are: methyl (meth)acrylate, ethyl (meth)acrylate, 2-ethylhexyl (meth) acrylate, decyl (meth) acrylate, dodecyl (meth) acrylate, tetradecyl (meth)acrylate, monomethyl maleate, monobutyl maleate, dimethyl maleate, dibutyl maleate, didecyl maleate, didodecyl maleate, didodecyl fumarate, phenyl (meth)acrylate, benzyl (meth)acrylate, and dibenzyl maleate.

As examples of (b2), linear and branched-chain $\alpha$-olefins containing 3 to 22 carbon atoms, such as propylene, 1-butene, 1-pentene, 1-hexene, 4-methylpentene-1, 1-octene, 1-dodecene, 1-tetradecene, 1-octadecene, etc., can be mentioned.

Among examples of (b3) are: alicyclic hydrocarbon vinylic monomers [e.g. cyclohexene, (di)cyclopentadiene, norbornene, pinene, indene, vinylcyclohexene, etc.]; alkadienes containing 4 to 12 carbon atoms [e.g. butadiene, isoprene, 1,4-pentadiene, 1,7-octadiene, etc.]; aromatic hydrocarbon vinylic monomers [styrene, vinyltoluene, etc.]; alkyl alkenyl ethers having alkenyl groups containing 2 to 4 carbon atoms [e.g. alkyl alkenyl ethers having linear or branched-chain alkyl groups containing 1 to 12 carbon atoms (e.g. methyl vinyl ether, ethyl vinyl ether, butyl vinyl ether, octyl vinyl ether, dodecyl vinyl ether, methyl allyl ether, ethyl allyl ether, butyl allyl ether, octyl allyl ether, dodecyl allyl ether, etc.), aryl vinyl ethers (e.g. phenyl vinyl ether etc.)]; vinyl ketones [e.g. methyl vinyl ketone, butyl vinyl ketone, phenyl vinyl ketone, etc.]; vinylic monomers containing halogen [vinyl chloride, vinylidene chloride, vinyl bromide, etc.]; vinylic monomers having an amido group or imido group {(meth)acrylamides which are unsubstituted or substituted with an alkyl group (1 to 4 carbon atoms) [e.g. (meth)acrylamide, N-methyl(meth)acrylamide, N-i-propyl(meth)acrylamide, N,N-dimethyl(meth)acrylamide, etc.], N-vinylcarboxamides [N-vinylformamide, N-vinylacetamide, N-vinylpyrrolidone, etc.], and unsubstituted or substituted maleimides [maleimide, phenylmaleimide, ethylmaleimide, dodecylmaleimide, etc.], etc.}; vinylic monomers having a hydroxyl group {aromatic vinyl monomers having a hydroxyl group [p-hydroxystyrene etc.], hydroxyalkyl(2 to 6 carbon atoms) (meth)acrylates [2-hydroxyethyl (meth)acrylate etc.], and alkenols containing 2 to 12 carbon atoms [vinyl alcohols (formed by hydrolysis of vinyl carboxylates unit), (meth)allyl alcohol, (iso)propenyl alcohol, 1-octenol, etc.] etc.}; primary to tertiary amino group-containing monomers {alkenylamines containing 2 to 6 carbon atoms [vinylamine, allylamine, crotylamine, etc.], aminoalkyl(2 to 6 carbon atoms) (meth)acrylates [aminoethyl (meth)acrylate, dimethylaminoethyl (meth)acrylate, diethylaminoethyl (meth)acrylate, morpholinoethyl (meth) acrylate, etc.], aminoalkyl (2 to 6 carbon atoms) (meth)acrylamides [aminoethyl(meth)acrylamide, dimethylaminopropyl(meth)acrylamide, etc.], aromatic vinylic monomers having an amino group [N, N-dimethylaminostyrene etc.], heterocyclic vinyl monomers containing nitrogen [vinylpyridine, vinylcarbazole, etc.] etc.}; vinylic monomers having a nitrile group or nitro group [(meth)acrylonitrile, cyanostyrene, nitrostyrene, etc.]; and vinylic monomers having an epoxy group [glycidyl (meth) acrylate, glycidyl (meth)allyl ether, etc.].

(A11) includes a binary copolymer comprising (a) and one kind of (b11) and a ternary or multiple-component copolymers comprising (a) and two or more kinds of (b), wherein at least part of (b) is (b11).

Still more preferred is the use of vinyl acetate, the use of vinyl acetate in combination with (b1) other than vinyl acetate and/or (b2), or the use of these in combination with a minor proportion of (b3).

The preferred species of (b1) other than vinyl acetate are alkenyl esters of aliphatic saturated carboxylic acids containing 3 to 16 carbon atoms among said various species of (b11) and alkyl esters of unsaturated carboxylic acids containing 1 to 16 carbon atoms among said various species of (b12) (dialkyl esters in the case of dicarboxylic acids), and the more preferred are vinyl esters of linear or branched-chain aliphatic saturated carboxylic acids containing 3 to 12 carbon atoms, particularly preferred are vinyl esters of branched-chain aliphatic saturated carboxylic acids containing 4 to 12 carbon atoms, especially preferred are vinyl esters of branched-chain tertiary aliphatic saturated carboxylic acids.

The ternary and multiple-component copolymers, particularly the ternary and quaternary copolymers, are advantageous in that the filterability is superior to that attainable with a binary copolymer.

For improved low temperature fluidity, (A11) should contains units of ethylene (a) in a molar proportion (Ma) of 70 to 95 mole %, more preferably 80 to 90 mole %, still more preferably 81 to 88 mole %, most preferably 82 to 87 mole %.

For improved low temperature fluidity, (A11) should contain units of ethylene (a) in a weight proportion (Wa) of preferably 30 to 85 % by weight, more preferably 50 to 75 % by weight, most preferably 52 to 68 % by weight.

Also for improved low temperature fluidity, (A11) contains other units of vinylic monomer (b) in a molar proportion (Mb) of preferably 5 to 30 mole %, more preferably 10 to 20 mole %, still more preferably 12 to 19 mole %, most preferably 13 to 18 mole %.

Furthermore, (A11) may contain a monomer or monomers other than ethylene and vinyl acetate in a proportion of preferably 0 to 15 mole %, more preferably 0.5 to 10 mole %, still more preferably 0.8 to 8 mole %, most preferably 1 to 5 mole %.

As specific combinations of (a) and (b), the following combinations may for example be mentioned:

(1) ethylene/vinyl acetate (mole ratio 84/16) copolymer,
(2) ethylene/vinyl acetate/vinyl neodecanate (mole ratio 84/15/1) copolymer,
(3) ethylene/vinyl acetate/vinyl 2-ethylhexanoate (mole ratio 83/15/2) copolymer,
(4) ethylene/vinyl acetate/4-methylpentene-1 copolymer,
(5) ethylene/vinyl acetate/2-ethylhexyl acrylate copolymer,
(6) ethylene/vinyl 2-ethylhexanoate copolymer.

The polymer (A11) is obtainable by copolymerizing (a) and (b) under conditions conducive to a predetermined hexane-insolubles. Further described is the polymer (A12) consisting exclusively in the required insoluble fraction of the copolymer (A0) of (a) and (b) can be mentioned.

(A11) should have a degree of branching not larger than 2.2%, more preferably not larger than 2.1%, still more preferably not larger than 2.0%, most preferably not larger than 1.8%.

Insofar as the degree of branching is not larger than 2.2%, the fuel oil composition may have sufficient low temperature fluidity.

(A12) should have a degree of branching preferably not larger than 2.8%, more preferably not larger than 2.3%, most preferably not larger than 2.2%.

The lower limit to the degree of branching of (A11) is 0.3%, more preferably 0.4%, most preferably 0.5%.

Insofar as it is not less than 0.3%, the solubility in base oil is sufficient and a satisfactory filterability of the fuel oil composition can be insured.

The degree of branching referred to above means the percentage of the number of methyl groups resulting from branching relative to the total number of methylene and methine groups derived from the vinyl groups of (a) and (b).

The degree of branching can be determined by $^1$H-NMR spectrometry.

Taking an ethylene-vinyl acetate copolymer as an example, said degree of branching can be calculated by substituting the peak intensity at 0.8 to 0.9 ppm [1] (assignable to branch methyl groups), the peak intensity at 1.0 to 1.9 ppm [2] (assignable to the vinylmethylene and methine groups of ethylene and to the vinylmethylene group of vinyl acetate), the peak intensity at ca 2.0 ppm [3] (assignable to the acetylmethyl group of vinyl acetate) and the peak intensity at 4.7 to 5. 0 ppm [4] (assignable to the vinylmethine group of vinyl acetate) into the following computational equation.

$$\texttt{Degree of branching (\%) = [1]/3 ÷ \{ ([2] - [1]/3)/2 + [1]/3 + [4] \} x 100}$$

In the case where a vinyl carboxylate other than vinyl acetate is comprised, the peak assignable to the carboxylic acid group may overlap with the peaks [1] and [2]. In such cases, the vinyl carboxylate content is determined from the peak intensity [5] (2.0 to 2.3 ppm), which is assignable to the proton attached to the carbon atom adjacent to the carbonyl group of said carboxylic acid group, and the peak intensity at 4.7 to 5.0 ppm [4] (assignable to the vinylmethine group of the fatty acid vinyl ester) and the absorption of the carboxylic acid group which overlaps with [1] and [2] is subtracted from its mole ratio to find the degree of branching.

In the case where an $\alpha$-olefin unit is contained (where a distinction can hardly be made between the branch and $\alpha$-olefin by $^1$H-NMR spectrometry), the degree of branching can be found by calculating the copolymerization ratio of the $\alpha$-olefin from its amount of charge and conversion and substracting the absorption of the $\alpha$-olefin side chain overlapping with [1] and [2] from the mole ratio found.

(A) and (A0) can be acquired by the known technology, for example by subjecting said vinylic monomers to radical polymerization either in a solvent or in the absence of a solvent.

The polymerization initiator which can be used includes azo initiators (e.g. azobisisobutyronitrile, azobisvaleronitrile, etc.) and peroxide initiators [e.g. diisopropyl peroxydicarbonate (hereinafter referred to briefly as DIPC), benzoyl peroxide, cumyl peroxide, lauryl peroxide, di-t-butyl peroxide (hereinafter referred to briefly as DTBP), and so on.

The polymerization solvent which can be used includes aliphatic or alicyclic hydrocarbons (e.g. hexane, heptane, octane, cyclohexane, etc.), aromatic hydrocarbons [e.g. toluene, xylene, ethylbenzene, $C_9$ aromatic mixed solvent (a mixture of trimethylbenzene, ethyltoluene, etc.), $C_{10-11}$ aromatic mixed solvent, etc.], and ketones (acetone, methyl ethyl ketone, methyl isobutyl ketone, etc.), among others. These polymerization solvents may be distilled off after completion of polymerization, but may be directly utilized as solvents for providing (A) or (A0) in the form of a solution.

(A11) can be produced by the above technology but employing polymerization conditions conducive to a sharp copolymer compositional distribution and a reduced degree of branching. A method for reducing the copolymer compositional distribution comprises adding the monomers dropwise with the progress of polymerization to keep the monomer ratio constant during the polymerization reaction. For insuring a decreased degree of branching, it is effective to lower the polymerization temperature to 30 to 130°C and, at the same time, use a chain transfer agent as an adjunct. The chain transfer agent which can be used includes known mercaptans (butylmercaptan, laurylmercaptan, etc.), secondary alcohols (isopropyl alcohol, s-butanol, etc.), substituted aromatic compounds (toluene, xylene, cumene, etc.), and aldehydes (propionaldehyde etc.). The polymerization in the absence of a solvent is more conducive to a comparatively low degree of branching and, hence, is preferred to the polymerization in the presence of a solvent.

Further disclosed but not a subject of the present invention is (A12), which can be obtained by, for example, subjecting (A0) to fractional extraction of the necessary polymer at a temperature causing partial precipitation of polymer in a solvent (for example, +10°C to -20°C, or a lower temperature). For example, (A0) is dissolved in a solvent such as hexane, heptane or cyclohexane and the solution is adjusted to a predetermined temperature and centrifuged to separate the soluble fraction from the insoluble fraction using a centrifuge. Then, the solvent is removed to recover the desired hexane-insoluble polymer (A12) in the hexane-insolubles.

(A2) includes a (co)polymer of one or more species of (c) and a copolymer of (c) with a vinylic monomer (d) having a short-chain alkyl group of 1 to 12 carbon atoms, among others.

The vinylic monomer (c) having a long-chain alkyl group, which constitutes (A2), includes long-chain aliphatic saturated carboxylic acid alkenyl esters (c1) having a $C_{13-50}$ alkyl group, unsaturated carboxylic acid long-chain alkyl esters (c2), long-chain alkanol-alkylene oxide adduct unsaturated carboxylic acid esters (c3), long-chain alkyl alkenyl ethers (c4), unsaturated carboxylic acid long-chain alkylamides (c5), unsaturated dicarboxylic acid long-chain alkylimides (c6), and $C_{16-50}$ long-chain $\alpha$-olefins (c7).

The preferred, among these, are (c1), (c2) and (c7), with (c2) being particularly preferred.

(c1) includes the esters of carboxylic acids containing 14 to 24 carbon atoms among those mentioned for (b11). Among these species of (c1), vinyl esters are preferred and vinyl esters of aliphatic saturated carboxylic acids having alkyl groups of 14 to 22 carbon atoms are still more preferred.

(c2) includes those esters, among the unsaturated carboxylic acid alkyl esters mentioned for (b12), which have alkyl moieties of 13 to 24 carbon atoms.

The preferred, among these esters (c2), are alkyl (meth)acrylates, dialkyl fumarates, dialkyl maleate, and dialkyl itaconate, with alkyl (meth)acrylates whose alkyl moieties contain 14 to 22 carbon atoms being particularly preferred.

(c3) includes the (meth)acrylic esters, fumaric monoesters, fumaric diesters, maleic monoesters, maleic diesters, itaconic monoesters, and itaconic diesters of $C_{2-4}$ alkylene oxide (briefly, AO) [ethylene oxide (briefly, EO), propylene oxide, butylene oxide, etc.]-$C_{13-50}$ alkanol (tetradecanol, pentadecanol, hexadecanol, octadecanol, behenyl alcohol, etc.) adducts.

The preferred, among these esters (c3), are the (meth) acrylic esters, fumaric diesters and maleic diesters of $C_{14-22}$ alkanol-EO (1 to 10 moles) adducts, with the (meth) acrylic esters of $C_{14-22}$ alkanol-EO (1 to 10 moles) adducts being particularly preferred.

The alkyl group as a constituent of (c4), (c5) or (c6) includes alkyl groups containing 13 to 24 carbon atoms (e.g. tetradecyl, hexadecyl, and octadecyl). (c4) includes vinyl ethers, allyl ethers, isopropenyl ethers, etc. having such alkyl groups.

(c5) includes substituted (meth)acrylamides, fumaramides, maleamides, itaconamides, etc. as substituted by said alkyl groups and (c6) includes substituted maleimides, itaconimides, etc. as substituted by said alkyl groups.

(c7) includes 1-hexadecene, 1-octadecene, $C_{18-22}$ α-olefin mixture, $C_{20-28}$ α-olefin mixture, and $C_{30-50}$ α-olefin mixture, among others.

Among these olefins (c7), α-olefins containing 16 to 24 carbon atoms are preferred.

(d) includes saturated or unsaturated aliphatic carboxylic acid ($C_{2-13}$) alkenyl esters (d1), unsaturated carboxylic acid alkyl ($C_{1-12}$) esters (d2), $C_{3-14}$ α-olefins (d3), and alkyl ($C_{1-12}$) alkenyl ethers (d4), among others.

(d1) includes those esters, among the saturated or unsaturated aliphatic carboxylic acid alkenyl esters mentioned for (b11), of aliphatic carboxylic acids containing 2 to 13 carbon atoms.

(d2) includes those esters, among the unsaturated carboxylic acid alkyl esters mentioned for (b12), which have alkyl moieties containing 1 to 12 carbon atoms.

(d3) includes those α-olefins, among the α-olefins mentioned for (b2), which contain 3 to 14 carbon atoms.

(d4) includes alkyl vinyl ethers among those mentioned for (b3).

The preferred, among these, is (d2), with (meth) acrylic acid alkyl esters being particularly preferred and methyl (meth)acrylate, butyl (meth)acrylate, and 2-ethylhexyl (meth)acrylate being especially preferred.

(A2) contains units of (c) in a proportion of preferably 20 to 100 % by weight, more preferably 30 to 70 % by weight, based on the total monomer weight.

In addition, (A2) contains units of (d) in a proportion of preferably not more than 80 % by weight, more preferably 30 to 70 % by weight, based on the total monomer weight.

Regarding the combination of (c) and (d) in (A2), the following specific combinations may be mentioned as examples:

(1) behenyl acrylate/methyl methacrylate copolymer
(2) behenyl acrylate/stearyl acrylate/methyl methacrylate copolymer
(3) behenyl acrylate/stearyl acrylate/methyl methacrylate/styrene copolymer
(4) behenyl methacrylate/methyl methacrylate copolymer
(5) behenyl methacrylate/stearyl methacrylate/methyl methacrylate copolymer
(6) vinyl stearate/vinyl acetate copolymer

(A2), like (A11), can be obtained by polymerization under judiciously selected conditions or by fractional extraction.

(A11) should have a cloud point (hereinafter referred to briefly as CP) in 5% kerosine in the range of preferably +30 to -10°C, more preferably +25 to -5°C, still more preferably +25 to 0°C. From the standpoint of low temperature fluidity, CP is preferably not below -10°C, and from the standpoint of filterability, it is preferably not higher than +30°C.

Incidentally, CP can be measured by dissolving a sample in kerosine at a concentration of 5% (under warming if necessary), cooling the solution gradually (0.5°C/min), and reading the temperature at which the solution begins to undergo clouding.

From low temperature fluidity and solubility points of view, (A11) should have a solubility parameter (SP) value of preferably 8.4 to 9.7, more preferably 8.9 to 9.5, still more preferably 8.95 to 9.4, most preferably 9.0 to 9.3.

When SP is designed to be not less than 8.4, the low temperature fluidity is improved and when SP is designed to be not more than 9.7, the solubility in base oil is improved.

Incidentally, SP is the value calculated by the method of Fedors [Polym. Eng. Sci., 14(2) 152, (1974)].

(A11) has a weight-average molecular weight (briefly, Mw) in the range of preferably 2,000 to 500,000, more preferably 2,500 to 100,000, still more preferably 3,000 to 50,000, most preferably 5,000 to 20,000.

When Mw is designed to be not less than 2,000, the low temperature fluidity is improved, and when it is designed to be not more than 500, 000, the solubility in base oil is improved.

(A11) should have a number-average molecular weight (briefly, Mn) in the range of preferably 1,000 to 200, 000, more preferably 1,500 to 50,000, still more preferably 2,000 to 20,000, most preferably 2,500 to 10,000.

When Mn is designed to be not less than 1,000, the low temperature fluidity is improved, and when it is designed to be not more than 200, 000, the solubility in base oil is improved.

In the present invention, Mw and Mn are molecular weight values determined by gel permeation chromatography on a polystyrene basis.

Preferably (A11) satisfies at least one, or two, of the above CP, SP and Mw requirements, and more preferably (A11) satisfies all of the requirements.

(A11) has a molecular weight distribution (Mw/Mn) of preferably not more than 2.3, more preferably not more than 2.2.

Referring to the mode of use of the flow improver of the invention, the polymerization reaction product may be diluted with a diluent, e. g. a solvent, and used as an additive concentrate. This prior dilution with a solvent is advantageous in that it facilitates dissolution in base oil, e.g. a fuel oil, and expression of low temperature fluidity.

Diluent (C) includes aliphatic solvents [aliphatic hydrocarbons containing 6 to 18 carbon atoms (hexane, heptane, cyclohexane, octane, decalin, kerosine, etc.)]; aromatic solvents {aromatic solvents containing 7 to 15 carbon atoms [toluene, xylene, ethylbenzene, $C_9$ aromatic mixed solvent (a mixture of trimethylbenzene and ethyltoluene, for instance), $C_{10-11}$ aromatic mixed solvent, etc.]}; and the fuel oils to be described hereinafter, such as fuel oils of 7 to 30 carbon atoms, among others.

The preferred, among these, are hydrocarbons containing 7 to 18 carbon atoms, with said $C_9$ aromatic mixed solvent and $C_{10-11}$ aromatic mixed solvent being particularly preferred.

The proportion of said diluent based on the weight of said additive concentrate is preferably 10 to 80 % by weight, more preferably 20 to 60 % by weight, most preferably 30 to 50 % by weight. The larger the proportion of the diluent is, the more readily does the additive concentrate dissolve in base oil but an excessively large proportion leads to an economic disadvantage.

The cloud point of the additive concentrate is preferably not higher than 80°C, more preferably -20 to 75°C, still more preferably 0 to 70°C, most preferably 10 to 65°C. Designing the cloud point to not higher than 80°C facilitates dissolution in base oil.

Incidentally, the cloud point of the additive concentrate according to the invention means the temperature determined by warming the concentrate directly until a homogeneous solution has formed, cooling the solution gradually, and reading the temperature at which the solution begins to undergo clouding.

The kinematic viscosity (JIS K2283) of the additive concentrate at 100°C is generally not higher than 100 m$^2$/s, preferably 5 to 80 mm$^2$/s, more preferably 10 to 60 mm$^2$/s. When the kinematic viscosity is not higher than 100 mm$^2$/s, the concentrate can be easily dissolved in base oil.

The additive concentrate may contain not only FI and diluent (C) according to the invention but also some other additive.

As an example of said other additive, there can be mentioned the polymer (B) with hexane-insolubles at +10°C of over 30%, preferably at least 40%, more preferably at least 50%.

The above hexane-insolubles at +10°C can be determined in the same manner as in the case of (A11).

(B) includes the copolymer (B1) containing units of (a) in a larger proportion than (A11) and the polymer (B2) containing units of (c) in a larger proportion than (A2) in terms of the average number of carbon atoms in said long-chain alkyl groups. Between these, (B1) is preferred.

The other vinylic monomer (b) as a constituent of (B1) includes the same monomers as those mentioned for (b) as a constituent of (A11) and the preferred examples are also the same.

Compared with (A11) described above, (B1) has a larger hexane-insolubles at +10°C but this increased fraction can be realized by increasing the proportion of (a) in the copolymer as compared with (A11).

(B1) has units of ethylene (a) mole content (Mb) of generally 80 to 99 mole %, preferably 86 to 98 mole %, still more preferably 88 to 97 mole %.

(Mb) is preferably higher than the mole content (Ma) of (a) in (A11). Thus, (Mb - Ma) is preferably not less than 1 mole %, more preferably not less than 2 mole %, most preferably not less than 3 mole %.

Use of (B1) with a higher (a) content leads to an increased insoluble fraction at +10°C and an improvement in low temperature fluidity.

(B1) has a weight content (Wb) of generally 50 to 97 % by weight, preferably 60 to 95 % by weight, still more preferably 70 to 91 % by weight.

Like (Mb), (Wb) is preferably larger than (Wa), and (Wb - Wa) is preferably not less than 2 % by weight, more preferably not less than 3 % by weight, most preferably not less than 5 % by weight.

Furthermore, (b) which is either similar or dissimilar to (b) used for the main chain may be graft-polymerized to (B1) consisting of (a) and (b). This graft polymerization is useful for improved solubility in base oil.

The preferred (b) to be graft-polymerized is (b1) mentioned hereinbefore, with (b12) being still more preferred and fumaric acid dialkyl esters and maleic acid dialkyl esters being particularly preferred.

The proportion of (b) so graft-polymerized in (B1) is preferably 0 to 60%, more preferably 10 to 50%, based on the total weight of (B1).

In the present invention wherein such a graft copolymer is used as (B1), the (a) content (mole content and weight content) of (B1) means the (a) content of the main chain.

The monomer (c) as a constituent of (B2) includes the same ones as mentioned for (c) as a constituent of (A2).

While (B2) has a larger hexane-insolubles at +10°C than (A2) described above, this larger fraction can be realized by increasing the number of carbon atoms in the long-chain alkyl group of (c) over the corresponding number of carbon atoms in (A2) and/or increasing the proportion of (c) in the copolymer.

The preferred species of (c) as a constituent of (B2) includes (c) having alkyl groups containing 18 to 24 carbon atoms, more preferred (c2) having alkyl groups containing 18 to 24 carbon atoms, especially preferred (meth)acrylic acid alkyl esters and itaconic acid dialkyl esters, which have alkyl groups containing 18 to 24 carbon atoms.

The difference between the average number of carbon atoms (Lb) of the long-chain alkyl group of (c) as a constituent of
(B2) and the average number of carbon atoms (La) of the long-chain alkyl group of (c) as a constituent of (A11), that is (Lb - La), is preferably not less than 2.

By using those with long-chain alkyl groups containing a larger average number of carbon atoms, the insoluble fraction at +10°C can be increased and the low temperature fluidity can be improved.

For (B2), too, vinylic monomers having short-chain alkyl groups (d) can be copolymerized as in the case of (A2).

As regards the relative amounts of (c) and (d) as constituent units of polymer (B2), the proportion of (c) is preferably 50 to 100%, more preferably 70 to 100%, and most preferably 80 to 100% and the proportion of (d) is preferably not more than 50%, more preferably not more than 30%, most preferably not more than 20%, all based on the total monomer.

The preferred ranges of Mw and Mn of (B) are the same as those of (A11).

Use of (B) is advantageous in that the low temperature fluidity can be improved at a lower level of addition of the flow improver.

As examples of (B), the following specific copolymers can be mentioned:

    (1) ethylene/vinyl acetate (mole ratio 90/10) copolymer
    (2) ethylene/vinyl acetate (mole ratio 96.5/3.5) copolymer-di-2-ethylhexyl fumarate graft polymer
    (3) ethylene/vinyl acetate/vinyl neodecanoate (mole ratio 82/17/1) copolymer-dibehenyl fumarate graft polymer
    (4) stearyl acrylate/behenyl acrylate copolymer
    (5) behenyl alcohol-EO (4 moles)

adduct-acrylate/dimethylaminoethyl methacrylate copolymer

In the case where (B) is used as said other additive, the weight ratio of (A11) : (B) is preferably 99:1 to 70:30, more preferably 95:5 to 80:20. Use of (B) in a proportion of not less than 1 is advantageous in that the low temperature fluidity can be improved by the flow improver at a low level of addition and a proportion of (B) not exceeding 30 is conducive to a satisfactory filterability at room temperature.

Still other additives which may be formulated in the additive concentrate are various known additives such as the wax dispersant [e.g. dialkyl fumarate/vinyl acetate copolymer, dialkyl fumarate/propylene copolymer, alkylphenol novolak, etc.], lubricity improver [e.g. oleic acid, linoleic acid, linolenic acid, and glycerin esters thereof], rust inhibitor [e.g. aliphatic amines and amine salts, organic phosphates, organic sulfonates, etc.], oxidation inhibitor [e.g. hindered phenols, salicylidene derivatives, etc.], cetane number improver [e.g. alkyl nitrates, for example amyl nitrate and isopropyl nitrate], detergent-dispersant, combustion improver, electrical conductivity imparting agent, and other kinds of flow improvers [e.g. polyol fatty acid esters].

Referring to said other additives, the level of addition of such additives other than (B) is generally 0 to 10,000 ppm, preferably 10 to 5,000 ppm, based on the total weight of the fuel oil composition.

Referring, further, to said additive concentrate, its components may be added each independently to base oil and, in this case, the order of addition is not particularly restricted.

The flow improver of the invention is particularly useful for improving the low temperature fluidity and low temperature filterability of middle distillates of petroleum oil and fuel oils (diesel fuel oil, heating oil, etc.), particularly fuel oils containing $C_{17-22}$ waxes (the usual wax content: 1 to 10%) [for depression of CFPP (cold filter plugging point) and PP (pour point)].

The fuel oil containing $C_{17-22}$ waxes includes the JIS No. 1 diesel fuel, JIS No. 2 diesel fuel, JIS No. 3 diesel fuel, JIS Special No. 3 diesel fuel and heating oil which are obtainable by the conventional distillation of low-sulfur crude oils (e.g. Southern crude oils such as Minas crude oil); the desulfurized diesel fuels and heating oil which are produced from ordinary crude oils via the hydrodesulfurizaiton process; and JIS No. 1 diesel fuel, JIS No. 2 diesel fuel, JIS No. 3 diesel fuel, JIS Special No. 3 diesel fuel and heating oil which are produced from the diesel fuel fraction obtained by blending the above desulfurized diesel fuel with straight run diesel fuel(diesel fuel prior to hydrodesulfurization).

Particularly, the invention is useful for fuel oils with a sharp wax crystallizing temperature, that is to say a narrow distillation range, for example the JIS No. 1 diesel fuel, JIS No. 2 diesel fuel, JIS No. 3 diesel fuel and JIS Special No. 3 oil, the sulfur contents of which are not higher than 0.05%, particularly not higher than 0.005%, which are obtainable by blending the desulfurized diesel fuel from a hydrodesulfurization process in a proportion of not less than 50%.

The distillation range of a fuel oil is generally measured by the distillation test method defined in JIS (K2254), and a fuel oil with a small difference between 90% running point (d90) and 20% running point (d20) is regarded as an oil having a narrow distillation range.

The cloud point (JIS K2269) of the fuel oil to which the flow improver of the invention is added is generally +5 to -25°C, preferably 0 to -7°C. The effect of improving low temperature fluidity is particularly pronounced when the flow improver is added to a fuel oil having a cloud point of 0 to -7°C.

The flow improver of the invention exhibits a remarkably satisfactory effect of improving low temperature fluidity at a low level of addition as compared with the known flow improvers when added to a fuel oil having a distillation characteristic with a d20 point in the range of 200 to 280°C and a d90 point in the range of 325 to 344°C, particularly 330 to 341°C.

The level of addition of the flow improver according to the invention is generally 10 to 2,000 ppm based on the fuel oil composition, and from performance and economic points of view, the addition level is preferably 20 to 1,500 ppm, more preferably 20 to 1,000 ppm, most preferably 20 to 700 ppm. In the case where (B) is concomitantly used, the combined total content of (A11) and (B) is generally 10 to 2,000 ppm, preferably 20 to 1,000 ppm.

The total content in the case where other flow improvers (e.g. polyol fatty acid esters) are concomitantly used is also the same as above.

The fuel oil composition prepared by using the flow improver of the invention preferably satisfies the following relation (1), more preferably the relation (2), most preferably the relation (3), between ($W_A$) which represents the content [ppm] of (A) and the d90 point [°C] of the fuel oil.

$$45 + 10 \times (344 - d90) \leq W_A \leq 45 + 70 \times (344 - d90) \qquad (1)$$

$$45 + 12 \times (344 - d90) \leq W_A \leq 45 + 60 \times (344 - d90) \qquad (2)$$

$$45 + 15 \times (344 - d90) \leq W_A \leq 45 + 50 \times (344 - d90) \qquad (3)$$

By insuring that $W_A$ is not less than 45 + 10 x (344 - d90), the low temperature fluidity can be further improved and by insuring that $W_A$ is not more than 45 + 70 x (344 - d90), the filterability at room temperature can be improved.

The flow improver of the invention exerts its effect on oils containing waxes, other than fuel oils, as well and is also useful for lubricating oils. Moreover, it is effective for oils containing flow inhibitors other than the waxes derived from petroleum oil fractions, improving the flow of oils containing a wax, a fatty acid, an aliphatic alcohol, and/or an aliphatic amine, which contains an even-number alkyl group, among others, which are derived from an animal oil or a vegetable oil.

BEST MODES FOR CARRYING OUT THE INVENTION

The following examples are intended to illustrate the present invention in further detail without defining the scope of the invention. It should be understood that all parts are parts by weight.

The polymers A-1 to A-5, B-1 to B-3, and X-1 to X-3, described below, were respectively used as FI. The constituent monomers (mole %) and the results of analyses are presented in Table 1.

Polymer A-1

A glass flask equipped with thermometer and stirrer was charged with 200 parts of polymer X-1 [ethylene/vinyl acetate coplymer (ethylene/vinyl acetate mole ratio = 85/15%, degree of branching 2.5, Mn 5,500, Mw 12,000)] and 800 parts of hexane and the polymer was dissolved by stirring at 60°C. The solution was left standing at 0°C for 4 hours and centrifuged at 0°C (10,000 rpm x 30 min) and the soluble fraction was recovered by decantation. This soluble fraction was further allowed to stand at -22 °C for 4 hours and centrifuged at -22 °C in the same manner as above and the soluble fraction was recovered by decantation. The remaining insoluble fraction was dried in vacuo at 150°C to give polymer A-1. A-1 was a copolymer of 85 mole % ethylene and 15 mole % vinyl acetate (confirmed by $^1$H-NMR analysis; the same confirmation method applies hereinafter).

Polymer A-2

The same reaction apparatus as used for production of Polymer A-1 was charged with 200 parts of an ethylene/vinyl acetate/vinyl neodecanoate copolymer (83/16/1 mole %, degree of branching 2.9, Mn 4,000, Mw 7,300) and 800 parts of hexane and the polymer was dissolved by stirring at 60°C. The solution was left standing at -20°C for 4 hours and centrifuged at -20°C to recover an insoluble fraction. This insoluble fraction was dried in vacuo at 150°C to give polymer A-2.

Polymer A-3

An autoclave equipped with stirrer, heater, blowing line, and dropping line was charged with 300 parts of cyclohexane. After nitrogen purging, the autoclave was pressurized to 9.8 MPa with ethylene and the temperature was raised to 80°C. Then, ethylene was introduced in such a manner that the above pressure was kept constant throughout the reaction. Then, a mixture of 98 parts of vinyl acetate and 26 parts of vinyl 2-ethylhexanoate and a mixture of 6 parts of 50% DIPC in a hydrocarbon solvent [Peroyl IPP-50, product of NOF Corporation] and 18 parts of propionaldehyde were added dropwise over 2 hours and the polymerization reaction was conducted at 80°C. After completion of dropwise addition, the reaction mixture was withdrawn from the autoclave and dried in vacuo to remove the unreacted monomers and solvent and recover polymer A-3.

Polymer A-4

In a pressure-resistant tubular reactor, a mixture of 533 parts of ethylene, 360 parts of vinyl acetate, 107 parts of vinyl neodecanoate, 40 parts of propionaldehyde, and 0.5 part of Peroyl IPP-50 was polymerized under the conditions of 120°C, 110 MPa, and a residence time of 3 min. After completion of polymerization, the reaction mixture was dried in vacuo to remove the unreacted monomers and recover polymer A-4.

Polymer A-5

Except that the proportions of feed monomers were changed to 506 parts of ethylene, 312 parts of vinyl acetate and 182 parts of vinyl neodecanoate, the polymerization reaction was carried out in otherwise the same manner as for the production of polymer A-4 to give polymer A-5.

Polymer X-1

The ethylene/vinyl acetate (= 85/15 mole %) copolymer shown in Table 1 was designated X-1.

Polymer X-2

The ethylene/vinyl acetate/vinyl neodecanoate (=84/14/2 mole %) copolymer shown in Table 1 was designated X-2.

Polymer X-3

The same autoclave as used for the production of polymer A-3 was charged with 300 parts of the solvent benzene. After nitrogen purging, the autoclave was pressurized to 12.7 MPa with ethylene and the temperature was raised to 90°C. Then, ethylene was introduced in such a manner that the above pressure was kept constant throughout the reaction. Then, 120 parts of vinyl acetate and 6 parts of dilauroyl peroxide were added dropwise over 2 hours and the polymerization reaction was conducted at 90°C. After completion of dropwise addition, the reaction mixture was withdrawn from the autoclave and dried in vacuo to remove the unreacted monomers and solvent and recover polymer X-3.

Polymer B-1

A glass reactor equipped with stirrer, heater, thermometer and nitrogen inlet pipe was charged with 500 parts of an ethylene/vinyl acetate copolymer (96.5/3.5 mole %, degree of branching 3.4, Mn 2,600, Mw 6,600) and 500 parts of di-2-ethylhexyl fumarate. After a nitrogen atmosphere was established in the reactor, the temperature was raised to 155°C and, at this temperature 20 parts of DTBP and 1.7 parts of laurylmercaptan were added dropwise over 2 hours. After completion of dropwise addition, the reaction was further continued at 155°C for 2 hours to give polymer B-1.
B-1 was a copolymer formed as di-2-ethylhexyl fumarate was graft-polymerized to the above-described ethylene/vinyl acetate copolymer.

Polymer B-2

Using 700 parts of an ethylene/vinyl acetate/vinyl neodecanoate copolymer (83/16/1 mole %, degree of branching 2.9, Mn 4,000, Mw 7, 300), 300 parts of dibehenyl fumarate, 9 parts of DTBP, and 0.7 part of laurylmercaptan, the reaction was conducted in otherwise the same manner as for the production of B-1 to give polymer B-2.
B-2 was a copolymer formed as dibehenyl fumarate was graft-polymerized to the above-described ethylene/vinyl acetate/vinyl neodecanoate copolymer.

Polymer B-3

Using 200 parts of polymer X-2 and changing the temperature for removing the insoluble fraction to +10°C and the temperature for removing the soluble fraction to +5°C, the reaction procedure for the production of polymer A-1 was otherwise repeated to obtain 10 parts of polymer B-3.

Table 1 Analyses of polymers

| Polymer No. | Structural unit (mole %) | | | | Mn | Mw | Degree of branching | S P | Hexane-insolubles (%) | | | CP (°C) |
|---|---|---|---|---|---|---|---|---|---|---|---|---|
| | Ethylene | VA | VNDA | VEHA | | | | | +10 °C | 0 °C | -20 °C | |
| A-1 | 85 | 15 | 0 | 0 | 5,900 | 12,500 | 2.0 | 9.12 | 0 | 1 | 88 | 0 |
| A-2 | 83 | 16 | 1 | 0 | 4,400 | 7,500 | 2.1 | 9.20 | 5 | 9 | 97 | 12 |
| A-3 | 83 | 15 | 0 | 2 | 4,800 | 8,700 | 1.7 | 9.16 | 9 | 18 | 86 | 15 |
| A-4 | 84 | 14 | 2 | 0 | 4,300 | 9,100 | 1.6 | 9.11 | 8 | 21 | 78 | 20 |
| A-5 | 84 | 12.5 | 3.5 | 0 | 4,400 | 9,500 | 1.2 | 9.07 | 5 | 11 | 72 | 14 |
| X-1 | 85 | 15 | 0 | 0 | 5,500 | 12,000 | 2.5 | 9.12 | 16 | 23 | 52 | 30 |
| X-2 | 84 | 14 | 2 | 0 | 3,200 | 7,500 | 4.2 | 9.11 | 7 | 17 | 43 | 15 |
| 1-3 | 80 | 20 | 0 | 0 | 4,900 | 9,900 | 2.3 | 9.29 | 2 | 6 | 44 | 10 |
| B-1 | Graft copolymer | | | | 4,200 | 17,000 | - | - | 78 | - | - | - |
| B-2 | Graft copolymer | | | | 3,700 | 85,000 | - | - | 87 | - | - | - |
| B-3 | 85 | 14 | 1 | 0 | 5,600 | 10,700 | 2.6 | - | 99 | - | - | - |

-: not determined
VA: vinyl acetate
VNDA: vinyl neodecanoate
VEHA: vinyl 2-ethylhexanoate

[Additive Concentrates]

Examples 1 to 9 and Comparative Examples 1 to 4

A glass reactor equipped with stirrer, heater and thermometer was charged with the polymer indicated in Table 2 and using 350 parts of petroleum series aromatic $C_{10-11}$ mixed solvent (initial boiling point 182°C to end point 204°C) as a diluent, the polymer was evenly dissolved at 100°C to give the additive concentrates (T1) to (T9) containing FI according to the invention and the additive concentrates (X1) to (X4) of Comparative Examples.
The CP and kinematic viscosity (100°C) values of these concentrates are given in Table 2.

### Table 2  Compositions and physical properties of additive concentrates

| | | Additive concentrate No. | Polymer (in parts) | C P (°C) | Kinematic viscosity (mm²/s) |
|---|---|---|---|---|---|
| Example | 1 | T 1 | (A-1) 650 | 15 | 45 |
| | 2 | T 2 | (A-2) 650 | 35 | 35 |
| | 3 | T 3 | (A-3) 650 | 40 | 37 |
| | 4 | T 4 | (A-4) 650 | 45 | 38 |
| | 5 | T 5 | (A-5) 650 | 40 | 41 |
| | 6 | T 6 | (A-1) 585 / (B-1) 65 | 65 | 46 |
| | 7 | T 7 | (A-1) 585 / (B-3) 65 | 50 | 43 |
| | 8 | T 8 | (A-2) 585 / (B-2) 65 | 55 | 49 |
| | 9 | T 9 | (A-3) 600 / (B-2) 50 | 55 | 47 |
| Compar. Example | 1 | X 1 | (X-1) 650 | 35 | 42 |
| | 2 | X 2 | (X-2) 650 | 25 | 28 |
| | 3 | X 3 | (X-3) 650 | 25 | 40 |
| | 4 | X 4 | (X-2) 585 / (B-1) 65 | 65 | 35 |

[Fuel oil compositions]

Examples 10 to 43 and Comparative Examples 5 to 22

To each of the fuel oils (diesel fuels) 1 to 5 having the properties indicated in Table 3, various additive concentrates were added at the levels indicated in Tables 4 to 8 and evenly mixed. Then the low temperature fluidity of each resulting composition was evaluated by measuring PP [pour point (°C) : the method defined in JIS K2269-3] and CFPP [cold filter plugging point (°C): the method defined in JIS K2288]. The filterability was evaluated by pumping a test oil controlled to a temperature of 5°C to a pressure filtration system equipped with a membrane filter (pore diameter 5 μm, filter diameter 13 mmφ) at a flow rate of 20 mL/min and measuring the passing time (min) until the filtration pressure had reached 0.1 MPa.

The results are presented in Table 4 to Table 8. It will be apparent that the flow improvers of the invention impart exceptionally favorable low temperature fluidity characteristics to all grades of diesel fuels without affecting the filterability adversely in any appreciable degree.

## Table 3  Properties of fuel oils

| | | Fuel oil 1 | Fuel oil 2 | Fuel oil 3 | Fuel oil 4 | Fuel oil 5 |
|---|---|---|---|---|---|---|
| Cloud point(℃) | | − 2 | − 5 | − 2 | − 3 | − 5 |
| CFPP (℃) | | − 5 | − 6 | − 4 | − 4 | − 6 |
| Distillation characteristic | Initial boiling point (℃) | 2 1 9 | 1 7 8 | 1 8 2 | 1 6 7 | 1 6 6 |
| | 20% (℃) | 2 7 0 | 2 4 2 | 2 4 6 | 2 6 6 | 2 2 4 |
| | 90% (℃) | 3 3 2 | 3 3 6 | 3 4 1 | 3 3 9 | 3 2 9 |
| | End point (℃) | 3 5 3 | 3 5 6 | 3 6 5 | 3 5 9 | 3 5 1 |
| Sulfur content (%) | | 0 . 0 0 4 | 0 . 0 0 3 | 0 . 0 0 5 | 0 . 0 0 2 | 0 . 0 0 3 |

## Table 4  Effects of addition of additive concentrates on fuel oil 1

| | Level of addition / Additive concentrate | | 5 0 0 ppm | 7 0 0 ppm | | 1 0 0 0 ppm |
|---|---|---|---|---|---|---|
| | | | C F P P (℃) | C F P P (℃) | P P (℃) | C F P P (℃) |
| Example | 10 | T 1 | − 6 | − 9 | − 2 2 . 5 | − 1 1 |
| | 11 | T 2 | − 7 | − 1 0 | − 2 5 | − 1 2 |
| | 12 | T 3 | − 7 | − 9 | − 2 7 . 5 | − 1 2 |
| | 13 | T 4 | − 8 | − 1 1 | − 2 7 . 5 | − 1 3 |
| | 14 | T 5 | − 1 0 | − 1 4 | − 2 7 . 5 | − 1 4 |
| Compar.Example | 5 | X 1 | − 4 | − 4 | − 2 0 | − 5 |
| | 6 | X 2 | − 4 | − 4 | − 2 2 . 5 | − 5 |
| | 7 | X 3 | − 4 | − 4 | − 2 2 . 5 | − 5 |

Table 5　Effects of addition of additive concentrates on fuel oil 2

| | | Level of addition<br>Additive concentrate | 3 0 0 ppm<br>C F P P (°C) | 5 0 0 ppm<br>C F P P (°C) | PP (°C) | Filterability (min) | 7 0 0 ppm<br>C F P P (°C) |
|---|---|---|---|---|---|---|---|
| Example | 15 | T 1 | − 8 | − 1 2 | − 2 2 . 5 | 1 5 | − 1 2 |
| | 16 | T 2 | − 9 | − 1 3 | − 2 5 | 3 2 | − 1 3 |
| | 17 | T 3 | − 9 | − 1 2 | − 2 5 | 2 1 | − 1 3 |
| | 18 | T 4 | − 9 | − 1 3 | − 2 5 | 2 5 | − 1 4 |
| | 19 | T 5 | − 1 0 | − 1 4 | − 2 5 | 3 5 | − 1 6 |
| | 20 | T 6 | − 9 | − 1 2 | − 2 2 . 5 | 1 0 | − 1 3 |
| | 21 | T 7 | − 9 | − 1 3 | − 2 2 . 5 | 1 0 | − 1 3 |
| | 22 | T 8 | − 9 | − 1 3 | − 2 5 | 1 4 | − 1 3 |
| | 23 | T 9 | − 1 0 | − 1 2 | − 2 5 | 1 8 | − 1 4 |
| Compar. Example | 8 | X 1 | − 5 | − 8 | − 1 7 . 5 | 4 | − 1 0 |
| | 9 | X 2 | − 5 | − 7 | − 1 7 . 5 | 2 7 | − 8 |
| | 10 | X 3 | − 5 | − 9 | − 2 0 | 1 1 | − 1 0 |
| | 11 | X 4 | − 5 | − 8 | − 2 0 | 1 2 | − 1 1 |

Table 6　Effects of addition of additive concentrates on fuel oil 3

| | | Level of addition<br>Additive concentrate | 1 5 0 ppm<br>C F P P (°C) | 2 0 0 ppm<br>C F P P (°C) | 3 0 0 ppm<br>C F P P (°C) | PP (°C) | Filterability (min) |
|---|---|---|---|---|---|---|---|
| Example | 24 | T 1 | − 9 | − 1 2 | − 1 2 | − 2 2 . 5 | 2 8 |
| | 25 | T 2 | − 1 0 | − 1 2 | − 1 3 | − 2 2 . 5 | 5 0 |
| | 26 | T 3 | − 7 | − 1 1 | − 1 5 | − 2 2 . 5 | 3 5 |
| | 27 | T 4 | − 8 | − 1 2 | − 1 5 | − 2 5 | 4 2 |
| | 28 | T 5 | − 9 | − 1 2 | − 1 5 | − 2 5 | 5 2 |
| | 29 | T 6 | − 1 0 | − 1 3 | − 1 4 | − 2 5 | 2 0 |
| | 30 | T 7 | − 1 1 | − 1 3 | − 1 4 | − 2 5 | 1 5 |
| | 31 | T 8 | − 1 1 | − 1 3 | − 1 4 | − 2 5 | 2 5 |
| | 32 | T 9 | − 1 0 | − 1 2 | − 1 5 | − 2 5 | 3 0 |
| Compar. Example | 12 | X 1 | − 3 | − 6 | − 8 | − 2 0 | 1 2 |
| | 13 | X 2 | − 3 | − 4 | − 7 | − 2 0 | 4 5 |
| | 14 | X 3 | − 3 | − 5 | − 8 | − 2 0 | 2 1 |
| | 15 | X 4 | − 3 | − 6 | − 8 | − 2 0 | 2 5 |

Table 7  Effects of addition of additive concentrates on fuel oil 4

| | | Level of addition | 3 0 0 ppm | 4 0 0 ppm | | 5 0 0 ppm |
|---|---|---|---|---|---|---|
| | Additive concentrate | | CFPP (℃) | CFPP (℃) | PP (℃) | CFPP (℃) |
| Example | 33 | T 1 | − 7 | − 1 1 | − 2 5 | − 1 2 |
| | 34 | T 2 | − 7 | − 1 1 | − 2 5 | − 1 3 |
| | 35 | T 3 | − 7 | − 1 0 | − 2 5 | − 1 3 |
| | 36 | T 4 | − 8 | − 1 1 | − 2 5 | − 1 4 |
| | 37 | T 5 | − 9 | − 1 4 | − 2 7 . 5 | − 1 5 |
| | 38 | T 9 | − 7 | − 1 2 | − 2 5 | − 1 5 |
| Compar.Example | 16 | X 1 | − 5 | − 6 | − 1 7 . 5 | − 7 |
| | 17 | X 2 | − 5 | − 6 | − 1 7 . 5 | − 7 |
| | 18 | X 3 | − 5 | − 6 | − 2 0 | − 7 |
| | 19 | X 4 | − 6 | − 7 | − 2 0 | − 8 |

Table 8  Effects of addition of additive concentrates on fuel oil 5

| | | Level of addition | 4 0 0 ppm | 6 0 0 ppm | 8 0 0 ppm |
|---|---|---|---|---|---|
| | Additive concentrate | | CFPP (℃) | CFPP (℃) | CFPP (℃) |
| Example | 39 | T 1 | − 1 0 | − 1 1 | − 1 1 |
| | 40 | T 2 | − 9 | − 1 2 | − 1 2 |
| | 41 | T 3 | − 9 | − 1 1 | − 1 2 |
| | 42 | T 4 | − 1 0 | − 1 2 | − 1 3 |
| | 43 | T 5 | − 1 2 | − 1 4 | − 1 4 |
| Compar.Example | 20 | X 1 | − 6 | − 7 | − 9 |
| | 21 | X 2 | − 6 | − 7 | − 9 |
| | 22 | X 3 | − 6 | − 7 | − 9 |

INDUSTRIAL APPLICABILITY

The flow improver and additive concentrate for fuel oil of the present invention, as compared with the conventional ones, improve the low temperature fluidity characteristics of fuel oils more remarkably, lowering the CFPP (cold filter plugging point) and PP (pour point) at lower levels of addition. Moreover, the filterability is little affected and substantially no filter plugging occurs at room temperature.

Particularly, these are more effective for low-sulfur diesel fuels with a narrow boiling point range whose low temperature fluidity could hardly be improved with the conventional flow improvers.

Furthermore, the fuel oil composition according to the present invention is improved in low temperature fluidity and is free from filterability troubles.

In addition, the flow improver of the invention exerts its effect on oils containing waxes, other than fuel oils, as well and is also useful for lubricating oils. Moreover, it is effective for oils containing flow inhibitors other than the waxes derived from petroleum oil fractions, improving the flow of oils containing a wax, a fatty acid, an aliphatic alcohol, and/or an aliphatic amine, which contains an even-number alkyl group, among others, which are derived from an animal oil or a vegetable oil.

**Claims**

1.  A flow improver for fuel oil,
    comprising
    a copolymer (A11) containing

    - 70 to 95 mole % structural units made of ethylene (a); and
    - 5 to 30 mole % structural units made of vinylic monomer(s) (b11) selected from a group consisting of vinyl acetate, vinyl propionate, vinyl hexanoate, vinyl 2-ethylhexanoate, vinyl neodecanoate, vinyl decanoate, vinyl dodecanoate, vinyl palmitate and vinyl stearate;
    - at minus 20 °C in hexane insoluble components in an amount of at least 60 % by weight; and
    - at plus 10 °C in hexane insoluble components in an amount of
    at most 30 % by weight,

    both percentages referring to the total weight of the copolymer (A11) **wherein**
    the method of preparing said copolymer (A11) includes specific polymerization conditions such as

    - using a polymerization temperature in the range of from 30 to 130 °C;
    - adding the monomers dropwise with the progress of polymerization to keep the monomer ratio constant during the polymerization reaction;
    - using a chain transfer agent selected from a group including mercaptans, secondary alcohols, substituted aromatic compounds and aldehydes; and
    - performing the polymerization reaction in absence of a solvent;

    in order to provide within the copolymer (A11) a degree of branching methyl groups which means the percentage of the number of methyl groups resulting from branching relative to the total number of methylene and methine groups derived from the vinyl groups of (a) and (b11) in a range of from 0,3 to 2,2 %.

2.  The flow improver according to Claim 1,
    **wherein**
    said vinylic monomer(s) (b11) includes at least vinyl acetate and optionally one or more other vinylic monomer(s) selected from a group consisting of vinyl propionate, vinyl hexanoate, vinyl 2-ethylhexanoate, vinyl neodecanoate, vinyl decanoate, vinyl dodecanoate, vinyl palmitate and vinyl stearate.

3.  A fuel oil additive concentrate,
    **comprising**
    the flow improver according to Claim 1 or 2; and
    a diluent; wherein
    the content of (A11) amounts of from 20 to 90 % by weight referring to the total weight of said fuel oil additive concentrate.

4.  The concentrate according to Claim 3,
    **further comprising**
    a vinylic polymer (B) containing at plus 10 °C in hexane-insoluble components in an amount of more than 30 % by weight.

**5.** The concentrate according to Claim 4,
**comprising**
a weight ratio of (A11) : (B) in the range of from 99 : 1 to 70 : 30.

**6.** The concentrate according to Claim 4 or 5,
**wherein**
said vinylic polymer (B) is a copolymer selected from a group consisting of

(1) an ethylene/vinyl acetate copolymer having an ethylene : vinyl acetate mole ratio of 90 : 10;
(2) a graft polymer, wherein di-2-ethylhexyl fumarate is grafted on an ethylene/vinyl acetate copolymer having an ethylene : vinyl acetate mole ratio of 96.5 : 3.5;
(3) a graft polymer, wherein dibehenyl fumarate is grafted on an ethylene/vinyl acetate/vinyl neodecanoate copolymer having an ethylene : vinyl acetate : vinyl neodecanoate mole ratio of 82 : 17 : 1;
(4) a stearyl acrylate/behenyl acrylate copolymer; and
(5) a copolymer obtained by polymerizing an adduct of (behenylalcohol with 4 moles ethylene oxide) with acrylate and with dimethylaminoethyl methacrylate.

**7.** A fuel oil composition
**comprising**
a fuel oil which contains waxes comprising 17 to 22 carbon atoms containing hydrocarbons; and
the flow improver according to Claim 1 or 2
in an amount of from 10 to 2,000 ppm based on the weight of said fuel oil.

**8.** The composition according to Claim 7,
**wherein**
the fuel oil is a low-sulfur oil having a sulfur-content not higher than 0.05 % by weight.

**9.** The composition according to Claim 8,
**wherein**
the fuel oil has a cloud point in the range of from minus 7 °C to 0 °C, and a 90 % running point (d90) in the range of from 325 °C to 344 °C; wherein
said cloud point is measured according to the Japanese Industrial Standard K2269; and
said d90 running point is a distillation characteristic according to 90 % running point (°C) of the fuel oil as defined according to Japanese Industrial Standard K2254.

**10.** The composition according to Claim 9,
**containing**
said fuel improver in an amount satisfying the following relation (1):

$$45 + 10 \times (344 - d90) \leq W_A \leq 45 + 70 \times (344 - d90) \qquad (1)$$

wherein:
$W_A$ represents the amount (ppm) of the flow improver; and
d90 represents the fore-defined distillation characteristic with the 90 % running point (°C) of the fuel oil.

**Patentansprüche**

**1.** Fließverbesserer für Heizöl,
umfassend
ein Copolymer (A11), enthaltend

- 70 bis 95 Molprozent Struktureinheiten aus Ethylen (a); und
- 5 bis 30 Molprozent Struktureinheiten aus vinylischen Monomer(en) (b11), ausgewählt aus der Gruppe bestehend aus Vinylacetat, Vinylpropionat, Vinylhexanoat, Vinyl-2-ethylhexanoat, Vinylneodecanoat, Vinyldecanoat, Vinyldodecanoat, Vinylpalmitat und Vinylstearat;

- Bestandteile, die bei minus 20 °C in Hexan unlöslich sind, in einer Menge von mindestens 60 Gewichtsprozent; und
- Bestandteile, die bei plus 10 °C in Hexan unlöslich sind, in einer Menge von höchstens 30 Gewichtsprozent,

wobei sich beide Prozentsätze auf das Gesamtgewicht des Copolymers (A11) beziehen,
**wobei**
das Verfahren zur Herstellung des Copolymers (A11) spezifische Polymerisationsbedingungen beinhaltet, wie

- Verwenden einer Polymerisationstemperatur im Bereich von 30 bis 130 °C;
- tropfenweises Zugeben der Monomere mit fortschreitender Polymerisation, um das Monomerverhältnis während der Polymerisationsreaktion konstant zu halten;
- Verwenden eines Kettenübertragungsmittels, ausgewählt aus der Gruppe umfassend Mercaptane, sekundäre Alkohole, substituierte aromatische Verbindungen und Aldehyde; und
- Durchführen der Polymerisationsreaktion in Abwesenheit eines Lösungsmittels;

um innerhalb des Copolymers (A11) einen Grad an verzweigten Methylgruppen bereitzustellen, der den Prozentsatz der Zahl der Methylgruppen, die aus Verzweigung relativ zur Gesamtzahl der Methylen- und Methin-Gruppen resultieren, die von den Vinylgruppen von (a) und (b11) stammen, in einem Bereich von 0,3 bis 2,2 % bedeutet.

2. Fließverbesserer nach Anspruch 1,
**wobei**
das/die vinylische(n) Monomer(e) (b11) mindestens Vinylacetat und gegebenenfalls ein anderes vinylisches Monomer oder mehrere andere vinylische Monomere beinhaltet, ausgewählt aus einer Gruppe bestehend aus Vinylpropionat, Vinylhexanoat, Vinyl-2-ethylhexanoat, Vinylneodecanoat, Vinyldecanoat, Vinyldodecanoat, Vinylpalmitat und Vi nylstearat.

3. Heizöladditiv-Konzentrat,
**umfassend**
den Fließverbesserer nach Anspruch 1 oder 2; und
ein Verdünnungsmittel; wobei
der Gehalt an (A11) 20 bis 90 Gewichtsprozent, bezogen auf das Gesamtgewicht des Heizöladditiv-Konzentrats, beträgt.

4. Konzentrat nach Anspruch 3,
**weiter umfassend**
ein vinylisches Polymer (B), welches Bestandteile, die bei plus 10 °C in Hexan unlöslich sind, in einer Menge von mehr als 30 Gewichtsprozent enthält.

5. Konzentrat nach Anspruch 4,
**umfassend**
ein Gewichtsverhältnis von (A11): (B) im Bereich von 99:1 bis 70:30.

6. Konzentrat nach Anspruch 4 oder 5,
**wobei**
das vinylische Polymer (B) ein Copolymer ist, ausgewählt aus einer Gruppe bestehend aus

(1) einem Ehtylen/Vinylacetat-Copolymer mit einem Ethylen:Vinylacetat-Molverhältnis von 90:10;
(2) einem gepfropftem Polymer, wobei di-2-Ethylhexylfumerat auf ein Ethylen/Vinylacetat-Copolymer mit einem Ethylen:Vinylacetat-Molverhältnis von 96,5:3,5 gepropft ist,
(3) einem gepfropften Polymer, wobei Dibehenylfumerat auf ein Ethylen/Vinylacetat/Vinylneodecanoat-Copolymer mit einem Ethylen:Vinylacetat:Vinylneodecanoat-Molverhältnis von 82:17:1 gepropft ist;
(4) einem Stearylacrylat/Behenylacrylat-Copolymer; und
(5) einem Copolymer, das erhalten wird durch Polymerizieren eines Addukts von (Behenylalkohol mit 4 Mol Ethylenoxid) mit Acrylat und mit Dimethylaminoethylmethacrylat.

7. Heizölzusammensetzung,
**umfassend**
ein Heizöl, welches Wachse, umfassend Kohlenwasserstoffe, die 17 bis 22 Kohlenstoffatome enthalten, enthält; und

den Fließverbesserer nach Anspruch 1 oder 2
in einer Menge von 10 bis 2.000 ppm, basierend auf dem Gewicht des Heizöls.

8. Zusammensetzung nach Anspruch 7,
   **wobei**
   das Heizöl ein schwefelarmes Öl mit einem Schwefelgehalt von nicht mehr als 0,05 Gewichtsprozent ist.

9. Zusammensetzung nach Anspruch 8,
   **wobei**
   das Heizöl einen Trübungspunkt im Bereich von minus 7°C bis 0°C, und einen 90% Destillationspunkt (running point) (d90) im Bereich von 325°C bis 344°C aufweist;
   wobei
   der Trübungspunkt nach dem japanischen Industriestandard K2269 gemessen wird; und
   der d90 Destillationspunkt (running point) ein Destillationscharakteristikum gemäß 90% Destillationspunkt (running point) (°C) des Heizöls ist, wie nach japanischen Industriestandard K2254 definiert.

10. Zusammensetzung nach Anspruch 9,
    **enthaltend**
    den Fließverbesserer in einer Menge, die die folgende Gleichung (1) erfüllt:

$$45 + 10 \times (344 - d90) \leq W_A \leq 45 + 70 \times (344 - d90) \qquad (1)$$

wobei:
$W_A$ die Menge (ppm) des Fließverbesserers darstellt; und
d90 das zuvor definierte Destillationscharakteristikum mit dem 90% Destillationspunkt (running point) (°C) des Heizöls darstellt.

## Revendications

1. Agent fluidifiant pour fioul comprenant
   un copolymère (A11) contenant

   - 70 à 95 % en moles de motifs structurels constitués d'éthylène (a) ; et
   - 5 à 30 % en moles de motifs structurels constitués d'un ou plusieurs monomères vinyliques (b11) choisis dans le groupe constitué par l'acétate de vinyle, le propionate de vinyle, l'hexanoate de vinyle, le 2-éthylhexanoate de vinyle, le néodécanoate de vinyle, le décanoate de vinyle, le dodécanoate de vinyle, le palmitate de vinyle et le stéarate de vinyle ;
   - des composants insolubles dans l'hexane à -20°C en une quantité d'au moins 60 % en poids ; et
   - des composants insolubles dans l'hexane à +10°C en une quantité d'au plus 30 % en poids,

   les deux pourcentages se référant au poids total du copolymère (A11),
   dans lequel
   le procédé de préparation dudit copolymère (A11) comprend des conditions de polymérisation spécifiques telles que

   - l'utilisation d'une température de polymérisation située dans la plage allant de 30 à 130°C ;
   - l'addition des monomères goutte à goutte avec la progression de la polymérisation pour que la proportion des monomères soit maintenue constante durant la réaction de polymérisation ;
   - l'utilisation d'un agent de transfert de chaîne choisi dans le groupe comprenant les mercaptans, les alcools secondaires, les composés aromatiques substitués et les aldéhydes ; et
   - la mise en oeuvre de la réaction de polymérisation en l'absence de solvant ;

   afin que le copolymère (A11) soit doté d'un degré de ramification des groupes méthyle, qui représente le pourcentage du nombre de groupes méthyle résultant d'une ramification par rapport au nombre total de groupes méthylène et méthine dérivés des groupes vinyle de (a) et (b11), situé dans la plage allant de 0,3 à 2,2 %.

**2.** Agent fluidifiant selon la revendication 1, dans lequel ledit ou lesdits monomères vinyliques (b11) comprennent au moins de l'acétate de vinyle et optionnellement un ou plusieurs autres monomères vinyliques choisis dans le groupe constitué du propionate de vinyle, hexanoate de vinyle, 2-éthylhexanoate de vinyle, néodécanoate de vinyle, décanoate de vinyle, dodécanoate de vinyle, palmitate de vinyle et du stéarate de vinyle.

**3.** Concentré d'additif pour fioul comprenant
un agent fluidifiant selon la revendication 1 ou 2 ; et
un diluant ;
dans lequel la teneur en (A11) est de 20 à 90 % en poids par rapport au poids total dudit concentré d'additif pour fioul.

**4.** Concentré selon la revendication 3, comprenant en outre un polymère vinylique (B) contenant des composants insolubles dans l'hexane à +10°C en une quantité supérieure à 30 % en poids.

**5.** Concentré selon la revendication 4, comprenant un rapport en poids (A11)/(B) situé dans la plage allant de 99/1 à 70/30.

**6.** Concentré selon la revendication 4 ou 5, dans lequel ledit polymère vinylique (B) est un copolymère choisi dans le groupe constitué par

(1) un copolymère d'éthylène/acétate de vinyle ayant un rapport molaire éthylène/acétate de vinyle de 90/10 ;
(2) un polymère greffé, dans lequel du fumarate de di-2-éthylhexyle est greffé sur un copolymère d'éthylène/acétate de vinyle ayant un rapport molaire éthylène/acétate de vinyle de 96,5/3,5 ;
(3) un polymère greffé, dans lequel du fumarate de dibéhényle est greffé sur un copolymère d'éthylène/acétate de vinyle/néodécanoate de vinyle ayant un rapport molaire éthylène/acétate de vinyle/néodécanoate de vinyle de 82/17/1 ;
(4) un copolymère d'acrylate de stéaryle/acrylate de béhényle ; et
(5) un copolymère obtenu par polymérisation d'un adduit de (alcool béhénylique avec 4 moles d'oxyde d'éthylène) avec un acrylate et avec du méthacrylate de diméthylaminoéthyle.

**7.** Composition de fioul comprenant
un fioul qui contient des cires comprenant 17 à 22 atomes de carbone contenant des hydrocarbures ; et
l'agent fluidifiant de la revendication 1 ou 2,
en une quantité de 10 à 2000 ppm par rapport au poids dudit fioul.

**8.** Composition selon la revendication 7, dans laquelle le fioul est une huile à faible teneur en soufre ayant une teneur en soufre ne dépassant pas 0,05 % en poids.

**9.** Composition selon la revendication 8, dans laquelle
ledit fioul a un point de trouble situé dans la plage allant de -7°C à 0°C et un point 90 % de distillation (d90) situé dans la plage allant de 325°C à 344°C ;
où
ledit point de trouble est mesuré selon la norme industrielle japonaise K2269 ; et ledit point 90 % de distillation est une caractéristique de distillation conforme au point 90 % de distillation (°C) du fioul tel que défini selon la norme industrielle japonaise K2254.

**10.** Composition selon la revendication 9, contenant ledit agent fluidifiant en une quantité satisfaisant à la relation (1) suivante :

$$45 + 10 \times (344 - d90) \leq W_A \leq 45 + 70 \times (344 - d90) \quad (1)$$

dans laquelle :

$W_A$ représente la quantité (ppm) de l'agent fluidifiant ; et
d90 représente la caractéristique de distillation définie ci-dessus avec le point 90 % de distillation (°C) du fioul.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US P3093623 A
- US P3048479 A
- DE 1147799
- WO 9400536 A
- WO 9607720 A
- WO 9400516 A
- WO 9617905 A
- WO 9607718 A
- EP 0493769 A
- WO 9929748 A

**Non-patent literature cited in the description**

- **FEDORS.** *Polym. Eng. Sci.,* 1974, vol. 14 (2), 152